# EUROPEAN PATENT SPECIFICATION

(11) **EP 2 730 969 B1**
(45) Date of publication and mention of the grant of the patent: **02.01.2019**
(21) Application number: 13192527.3
(22) Date of filing: 12.11.2013
(51) Int. Cl.: G02F 1/1335, G02F 1/13363, G02F 1/1347

(54) **Transflective display panel and display device comprising same**
Transflektive Anzeigetafel und Anzeigevorrichtung damit
Panneau d'affichage transflectif et dispositif d'affichage le comprenant

(30) Priority: 12.11.2012 CN 201210452116
(43) Date of publication of application: 14.05.2014
(73) Proprietor: BOE Technology Group Co., Ltd., Beijing 100015 (CN)
(72) Inventor: Qin, Guangkui, 100176 Beijing (CN); You, Jae Geon, 100176 Beijing (CN)
(74) Representative: Isarpatent

(56) References cited:
- EP-A1- 2 161 613
- WO-A2-02/29484
- WO-A2-97/01789
- US-A1- 2004 160 551
- US-A1- 2006 187 183

## Description

### BACKGROUND OF THE INVENTION

### FIELD OF THE INVENTION

The present invention relates to the technical field of displays, and in particular, to a display panel and a display device.

### DESCRIPTION OF THE PRIOR ART

Transflection technology arises gradually in the 21^{st} century. The main reason lies in that the transmissive mode and the reflective mode have respective advantages and disadvantages, while the transflective display mode integrates the advantages thereof.

Reflective Screen: there exists a reflecting mirror on the back of the screen, for providing a light source for reading under sunlight and lamplight, it has the advantage of an excellent performance under a strong light source such as outdoor sunshine, and it has the disadvantage of being unclear or unable to read under a dim light or under a lightless condition.

Transmissive Screen: there exists no reflecting mirror on the back of the screen, and a light source is provided by a back light, it has the advantage of great readability under a dim light or under a lightless condition, and it has the disadvantage that the luminance of the backlight under outdoor sunlight is severely insufficient. Moreover, the electricity quantity will be lost rapidly and the effect thereof will be worse just by improving the luminance of the back light.

Transflective Screen: the reflecting mirror on the back of the reflective screen is replaced by a specularly reflecting film, and a Transmission-type backlight is added. The specularly reflecting film is transflective, it is a mirror when seen from its front face, and it is a transparent glass when seen from its back face. It can be said that a transflective screen is a hybrid of a reflective screen and a transmissive screen, which has the advantages of the reflective screen and the transmissive screen, that is, the great readability of the reflective screen under outdoor sunlight and the excellent readability of the transmissive screen under a dim light and a lightless condition.

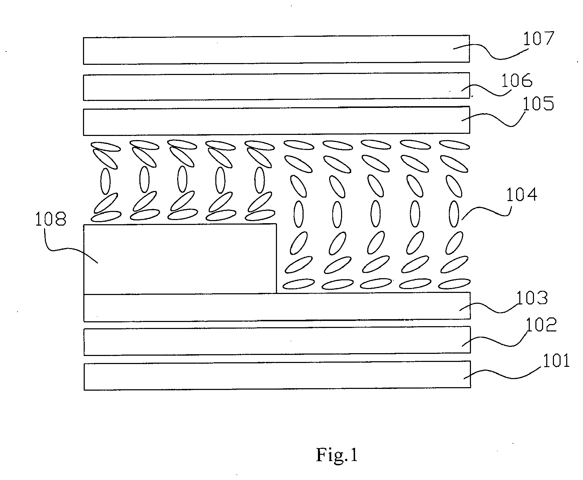

The structure of a traditional transflective display panel is as shown in Fig.1, which comprise a lower polarizer sheet 101, a first quarter wave plate 102, a liquid crystal cell, second quarter-wave plate 106 and an upper polarizer sheet 107 that are laminated in turn, wherein the liquid crystal cell is constituted of an array substrate 103, a color film substrate 105 and a liquid crystal layer 104 assembled between the array substrate 103 and the color film substrate 105. Each of pixels of the liquid crystal cell is divided into a transmissive region and a reflective region, and a reflecting plate 108 is provided in the area corresponding to the reflective region in the liquid crystal cell. Because a reflecting plate is provided in the liquid crystal cell, the process for producing the display panel will be complex and expensive, and the display effect will be poor.

US 2006/187183A1 discloses a liquid crystal display device and a driving method used in the same. EP 2161613A1 discloses a display apparatuses having an active transflective device.

US 2004/160551A1 discloses a liquid crystal display viewable under all lighting conditions.

WO 02/29484A2 discloses a high brightness transflective LCD having the features listed in the preamble of claim 2, and a method using a tunable mirror.

WO 97/01789A2 discloses an optical panel capable of switching between reflective and transmissive states, and having the features listed in the preamble of claim 1.

### SUMMARY OF THE INVENTION

### Technical Problem To Be Solved

The technical problem to be solved by the invention is to provide a display panel and a display device having a good display effect. The process for producing the display panel is simple and economical.

### Technical Solutions

To solve the above problem, according to the invention, a display panel according to claim 1 or 2 is provided, which comprises a liquid crystal cell, an upper polarizer sheet arranged above the liquid crystal cell, a lower polarizer sheet arranged under the liquid crystal cell and a transflective film arranged under the lower polarizer sheet.

The transflective film comprises a phase retardation plate and a first reflective polarizer sheet under the phase retardation plate.

According to a first aspect of the invention, the transmission axis of the first reflective polarizer sheet is parallel to the transmission axis of the lower polarizer sheet, the phase retardation value of the phase retardation plate is an odd multiple of one-half wavelength, and a mode conversion between the full transmissive mode, the transflective mode and the full reflective mode can be achieved in the display panel by adjusting the optical axis direction of the phase retardation plate.

Thus, when the optical axis of the phase retardation plate and the transmission axis of the first reflective polarizer sheet form an angle of 0° or 90°, the display panel is in a full transmissive mode; when the optical axis of the phase retardation plate and the transmission axis of the first reflective polarizer sheet form an angle of 45°, the display panel is in the full reflective mode; and when the optical axis of the phase retardation plate and the transmission axis of the first reflective polarizer sheet form an angle which is greater than 0° and less than 45°, or greater than 45° and less than 90°, the display panel is in transflective mode.

According to a second aspect of the invention, the transmission axis of the first reflective polarizer sheet is perpendicular to the transmission axis of the lower polarizer sheet, the phase retardation value of the phase retardation plate is an odd multiple of one-half wavelength, and a mode conversion between the full transmissive mode, the transflective mode and the full reflective mode can be achieved in the display panel by adjusting the optical axis direction of the phase retardation plate.

Thus, when the optical axis of the phase retardation plate and the transmission axis of the first reflective polarizer sheet form an angle of 0° or 90°, the display panel is in the full reflective mode; when the optical axis of the phase retardation plate and the transmission axis of the first reflective polarizer sheet form an angle of 45°, the display panel is in the full transmissive mode; and when the optical axis of the phase retardation plate and the transmission axis of the first reflective polarizer sheet form an angle which is greater than 0° and less than 45°, or greater than 45° and less than 90°, the display panel is in the transflective mode.

In another aspect of the invention, there is further provided a display device comprising one of the above display panels.

### Beneficial Effect

In the invention, a transflective display is realized without changing the structure of the traditional liquid crystal cell, thus not only the transflective display has an improved effect, for example, without the problems of poor visual angle and low contrast, while with an effect the same as or better than that of a general transmissive mode and a good stability in outdoor, but also the transflective display has a simple structure and an inexpensive cost in comparison with the existing transflective display mode.

The invention is not limited by the liquid crystal mode and may be realized in any liquid crystal mode (for example, FFS, VA, IPS, TN and ECB modes), so that the display panel can be widely used.

### BRIEF DESCRIPTION OF THE DRAWINGS

Fig. 1 is a schematic diagram showing a laminate structure of a transflective display panel in the prior art
Fig.2 is a schematic diagram showing a laminate structure of a display panel according to Example 1 of the invention; and
Fig.3 is a schematic diagram showing a laminate structure of a display panel according to Example 2 of the invention.

### DETAILED DESCRIPTION OF THE PREFERRED EMBODIMENTS

The invention will be illustrated in detail below in conjunction with the drawings and embodiments.

The invention records a display panel, which comprises a liquid crystal cell, an upper polarizer sheet arranged above the liquid crystal cell, a lower polarizer sheet arranged under the liquid crystal cell and a transflective film arranged under the lower polarizer sheet.

It may be seen that, in the invention, because no reflecting plate is provided in the liquid crystal cell and the transflective display of a liquid crystal panel is realized via a transflective film under the lower polarizer sheet, on one hand, it is no need to change the structure of the traditional liquid crystal cell so as to reduce the cost of the transflective display panel; on the other hand, the transflective liquid crystal panel of the invention is not limited by the liquid crystal mode and may be realized in any liquid crystal mode (for example, FFS, VA, IPS, TN and ECB modes), so that the display panel can be widely used.

### Specifically:

### Example 1

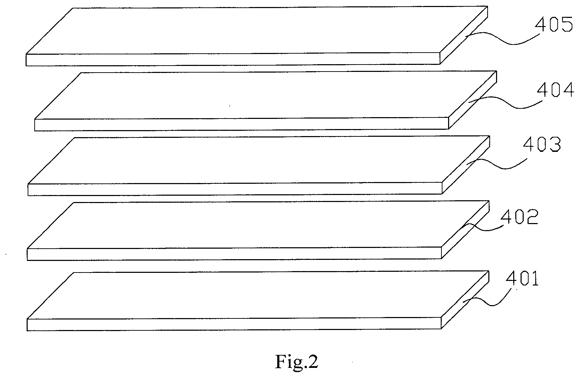

As shown in Fig.2, this Example records a display panel, which comprises an upper polarizer sheet 405, a liquid crystal cell 404, a lower polarizer sheet 403 and a transflective film, wherein the upper polarizer sheet 405, the liquid crystal cell 404, the lower polarizer sheet 403 and the transflective film are arranged in turn from top to bottom.

In this Example, the transflective film comprises a phase retardation plate 402 and a first reflective polarizer sheet 401 under the phase retardation plate 402. The first reflective polarizer sheet 401 has a property of being transflective. In this Example, a reflected light and a transmitted light that are reflected and transmitted by the first reflective polarizer sheet 401 are both linearly polarized lights, the polarization directions thereof are perpendicular to each other, the phase retardation plate 402 and the first reflective polarizer sheet 401 are provided under the lower polarizer sheet 403, and the reflection-transmission proportion of the display panel is controlled by controlling the polarization property of the transmitted light and the reflected light by the phase retardation plate 402, so that the transflective effect may be attained without the need to change the structure of the traditional liquid crystal cell 404. Moreover, the process for manufacturing the display panel is simple, and the display panel has a good display effect.

In this Example, for the phase retardation plate 402, the optical axis direction is adjustable. The proportion of the transmitted light to the reflected light of the display panel is adjusted by adjusting the optical axis direction of the phase retardation plate 402.

In this Example, the transmission axis of the first reflective polarizer sheet 401 is parallel to or pependicular to the transmission axis of the lower polarizer sheet 403, thus it will be more convenient to adjust the proportion of the transmitted light to the reflected light, and the full reflective display effect and the full transmissive display effect may be attained.

For the display panel according to this Example, the proportion of the transmitted light to the reflected light of the display panel may be adjusted by adjusting the optical axis direction of the phase retardation plate 402. That is, the proportion of the transmitted light to the reflected light of the display panel may be adjusted by the following method: Since the phase retardation value is fixed, it may be realized by controlling the optical axis direction thereof.

This embodiment will be illustrated below in two specific cases:
1. The transmission axis of the first reflective polarizer sheet 401 is kept parallel to the transmission axis of the lower polarizer sheet 403 of the display panel, the phase retardation value of the phase retardation plate 402 is equal to an odd multiple of one-half wavelength (preferably, one-half wavelength), and the transmissive and reflective state and the transmission-reflection proportion are realized by controlling the optical axis direction of the phase retardation plate 402, thereby the mode conversion (comprising the full transmissive mode, the transflective mode and the full reflective mode) can be achieved. In this Example, when the optical axis of the phase retardation plate and the transmission axis of the first reflective polarizer sheet form an angle of 0° or 90°, the display panel will be in the full transmissive mode; when the optical axis of the phase retardation plate and the transmission axis of the first reflective polarizer sheet form an angle of 45°, the display panel will be in the reflective mode; when the optical axis of the phase retardation plate and the transmission axis of the first reflective polarizer sheet form an angles of the degree other than 0°, 45° and 90°, the display panel will be in the transflective mode, and the transmission-reflection proportion will be determined by the size of the angle.

The operating principle thereof will be as follows. When the outside ambient light is strong, only a linearly polarized light with a polarization state parallel to the transmission axis of the lower polarizer sheet 403 in the ambient light can be transmitted downward through the lower polarizer sheet 403. At this point, the phase retardation value of the phase retardation plate is an odd multiple of one-half wavelength (preferably, one-half wavelength), and the three methods for adjusting the optical axis direction of the phase retardation plate are shown. 1) When the optical axis of the phase retardation plate 402 and the transmission axis of the lower polarizer sheet 403 of the display panel form an angle of 0° or 90°, a linearly polarized light through the lower polarizer sheet 403 passes through the phase retardation plate 402 at the time, the polarization direction thereof will not be changed, thus the linearly polarized light will be directly transmitted through the first reflective polarizer sheet 401 below again. At the same time, for a light from the backlight source, when it first reaches the first reflective polarizer sheet 401, only a linearly polarized light with a polarization direction parallel to the transmission axis of the first reflective polarizer sheet 401 can pass through, and then the linearly polarized light again passes through the phase retardation plate 402, and at this point the optical axis of the phase retardation plate and the transmission axis of the lower polarizer sheet form an angle of 0° or 90°, the linearly polarized light through the first reflective polarizer sheet may be directly transmitted through the phase retardation film 402, and because the transmission axis of the lower polarizer sheet will be parallel to the transmission axis of the first reflective polarizer sheet, the linearly polarized light may be also directly transmitted through the lower polarizer sheet, so that the full transmission may be realized without any reflection. 2) When the optical axis of the phase retardation plate 402 and the transmission axis of the lower polarizer sheet 403 of the display panel form an angle of 45°, after the linearly polarized light passes through the phase retardation plate, the polarization direction thereof will be rotated by 90°, thus for an external light reaching the lower polarizer sheet, only a linearly polarized light with a polarization direction parallel to the transmission axis of the lower polarizer sheet can be transmitted through the lower polarizer sheet, and after the linearly polarized light passes through the phase retardation plate, the polarization direction of the linearly polarized light will be vertical to the transmission axis of the first reflective polarizer sheet, and the linearly polarized light will be reflected by the first reflective polarizer sheet at this point, the reflected linearly polarized light passes through the phase retardation plate again, and the polarization direction of the linearly polarized light will be rotated by 90°, and because the polarization direction of the linearly polarized light will be parallel to the transmission axis of the lower polarizer sheet at this point, the linearly polarized light may pass through the lower polarizer sheet again, thereby passing through the liquid crystal panel. At the same time, after reaching the first reflective polarizer sheet and the phase retardation plate, the light from the backlight source will become a linearly polarized light with a polarization direction perpendicular to the transmission axis of the lower polarizer sheet, thus the linearly polarized light cannot be transmitted through the lower polarizer sheet, and the full reflective mode may be realized. 3) When the optical axis of the phase retardation plate 402 and the transmission axis of the lower polarizer sheet 403 of the display panel form an angle other than 0°, 45° or 90°, the transflective mode will be realized.
2) The transmission axis of the first reflective polarizer sheet is kept perpendicular to the transmission axis of the lower polarizer sheet 403 of the display panel, the phase retardation value of the phase retardation plate 402 is an odd multiple of one-half wavelength (preferably, one-half wavelength), and the transmissive and reflective state and the transmission-reflection proportion are realized by controlling the optical axis of the phase retardation plate 402, thereby the mode conversion (comprising the full transmissive mode, the transflective mode and the full reflective mode) can be achieved.

In this Example, when the optical axis of the phase retardation plate and the transmission axis of the first reflective polarizer sheet form an angle of 0° or 90°, the display panel will be in the full reflective mode; when the optical axis of the phase retardation plate and the transmission axis of the first reflective polarizer sheet form an angle of 45°, the display panel will be in the full transmissive mode; and when the optical axis of the phase retardation plate and the transmission axis of the first reflective polarizer sheet form an angle other than 0°, 45° or 90°, the display panel will be in the transflective mode, and the transmission-reflection proportion will be determined by the size of the angle.

The operating principle thereof will be as follows. When the outside ambient light is strong, only a linearly polarized light with a polarization state parallel to the transmission axis of the lower polarizer sheet 403 in the ambient light can be transmitted downward through the lower polarizer sheet 403. At this point, the phase retardation value of the phase retardation plate is an odd multiple of one-half wavelength (preferably, one-half wavelength), and the adjustment to the optical axis of the phase retardation plate may have specifically the following three cases. 1) When the optical axis of the phase retardation plate 402 and the transmission axis of the lower polarizer sheet 403 of the display panel form an angle of 0° or 90°, a linearly polarized light through the lower polarizer sheet 403 passes through the phase retardation plate 402 at the time, the polarization direction thereof will not be changed, thus the linearly polarized light will be fully reflected when reaching the reflective polarizer sheet below again, then it again passes through the phase retardation plate 402, and the polarization direction thereof will not be changed, so that the light will be fully transmitted through the lower polarizer sheet 403; at the same time, for a light from the backlight source, when reaching the first reflective polarizer sheet, only a linearly polarized light with a polarization direction parallel to the transmission axis of the first reflective polarizer sheet can be transmitted through the first reflective polarizer sheet, and the linearly polarized light can directly pass through the phase retardation plate, but it cannot pass through the lower polarizer sheet, thus the full reflective mode of the display panel may be realized. 2) When the optical axis of the phase retardation plate 402 and the transmission axis of the display panel form an angle of 45°, after a linearly polarized light passes through the phase retardation plate 402, the polarization state of a linearly polarized light will be rotated by 90°, and at this point, the polarization state of the polarized light is just parallel to the transmission optical axis of the reflective polarizer sheet below, and the light will be fully transmitted; at the same time, when a light from the backlight source reaches the first reflective polarizer sheet, only a linearly polarized light with a polarization direction parallel to the transmission axis of the first reflective polarizer sheet can be transmitted, and after passing through the phase retardation plate, the polarization direction of the linearly polarized light will be rotated by 90, so that it can pass through the lower polarizer sheet, thereby the full transmissive mode may be realized. 3) When the optical axis of the phase retardation plate 402 and the transmission axis of the display panel form an angle other than 0°, 45° or 90°, the transflective mode will be realized.

It may be seen from this Example that, for the transflective film with an adjustable transmission-reflection ratio, in the invention, a free switch between the full transmissive mode, the full reflective mode and the transflective mode of a display device may be realized by adjusting the transmission-reflection ratio of the transflective film with an adjustable transmission-reflection ratio, by adjusting the optical axis direction of the adjustable phase retardation plate, so that the display panel may be used flexibly.

### Example 2

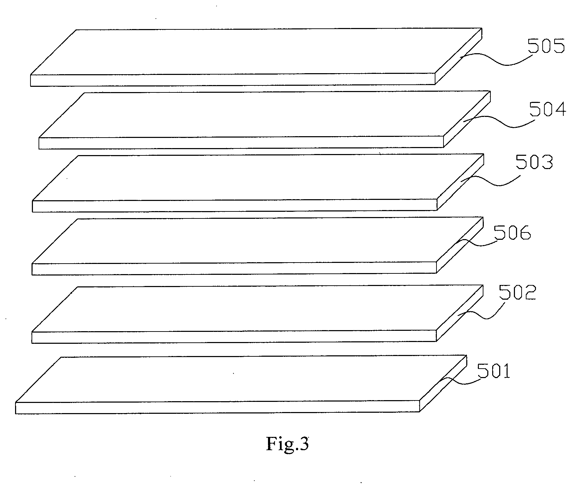

As shown in Fig.3, the structure of the display panel according to this Example is basically the same as that of Example 1, which comprises an upper polarizer sheet 505, a liquid crystal cell 504, a lower polarizer sheet 503 and a transflective film, wherein the upper polarizer sheet 505, the liquid crystal cell 504, the lower polarizer sheet 503 and the transflective film are arranged in turn from top to bottom, and the difference is that a second reflective polarizer sheet 506 is further provided between the transflective film and the lower polarizer sheet 503, and the transmission axis of the second reflective polarizer sheet 506 is parallel to the transmission axis of the lower polarizer sheet 503 in this embodiment.

In Fig.3 of this Example, it only shows an example in which the transflective film is the phase retardation plate 502 and the first reflective polarizer sheet 501.

In the case that the second reflective polarizer sheet 506 is not provided, when the ambient light reaches the lower polarizer sheet 503, only a light with a polarization direction parallel to the lower polarizer sheet 503 can be transmitted, while a light with a polarization direction non-parallel to the lower polarizer sheet 503 will be absorbed. After the second reflective polarizer sheet 506 is provided, the light that cannot be transmitted will be reflected back by the second reflective polarizer sheet 506 instead of being absorbed, because reflecting and scattering parts exist in the backlight module, the reflected linearly polarized light will contain a plurality of linearly polarized lights having different polarization directions after being reflected and scattered by the backlight module, and a part of these linearly-polarized lights can be reutilized and again pass through the second reflective polarizer sheet, when the linearly polarized lights reach the lower polarizer sheet 503 again, due to the change of the polarization state, they may be transmitted upward through the lower polarizer sheet 503, thereby the utilization rate of the light can be improved.

### Example 3

This Example records a display device, which comprises the display panel according to any one of Example1-2, and a backlight module arranged under the display panel.

The display device according to this Example may be a product or a component with a display function, for example, a liquid crystal panel, a liquid crystal TV, a liquid crystal display, a digital photo frame, a mobile phone and a flat panel computer, etc.

In the invention, a transflective display is realized without changing the structure of the traditional liquid crystal cell, thus not only the transflective display has an improved effect, for example, without the problems of poor visual angle and low contrast, while with an effect the same as or better than that of a general transmissive mode and a good stability in outdoor, but also the transflective display has a simple structure and an inexpensive cost in comparison with the existing transflective display mode.

The above embodiments are only used to illustrate the invention, rather than limiting the invention; various variations and modifications may also be made by one of ordinary skills in the art without departing from the scope of the invention as defined by the appended claims.

## Claims

1. A display panel comprising a liquid crystal cell (404, 504), an upper polarizer sheet (405, 505) arranged above the liquid crystal cell, a lower polarizer sheet (403, 503) arranged under the liquid crystal cell, and a transflective film arranged under the lower polarizer sheet, the transflective film comprising a phase retardation plate (402, 502) and a first reflective polarizer sheet (401, 501) under the phase retardation plate, wherein the transmission axis of the first reflective polarizer sheet is parallel to the transmission axis of the lower polarizer sheet,
**characterized in that**
the phase retardation value of the phase retardation plate is an odd multiple of one-half wavelength, and
further **characterised by**
means for adjusting the optical axis direction of the phase retardation plate, whereby a mode conversion between a full transmissive mode, a transflective mode and a full reflective mode can be achieved in the display panel, so that: when the optical axis of the phase retardation plate and the transmission axis of the first reflective polarizer sheet form an angle of 0° or 90°, the display panel is in the full transmissive mode; when the optical axis of the phase retardation plate and the transmission axis of the first reflective polarizer sheet form an angle of 45°, the display panel is in the full reflective mode; and when the optical axis of the phase retardation plate and the transmission axis of the first reflective polarizer sheet form an angle which is greater than 0° and less than 45°, or greater than 45° and less than 90°, the display panel is in the transflective mode.

2. A display panel comprising a liquid crystal cell (404, 504), an upper polarizer sheet (405, 505) arranged above the liquid crystal cell, a lower polarizer sheet (403, 503) arranged under the liquid crystal cell, and a transflective film arranged under the lower polarizer sheet, the transflective film comprising a phase retardation plate (402, 502) and a first reflective polarizer sheet (401, 501) under the phase retardation plate, wherein the transmission axis of the first reflective polarizer sheet is perpendicular to the transmission axis of the lower polarizer sheet,
**characterized in that**
the phase retardation value of the phase retardation plate is an odd multiple of one-half wavelength, and
further **characterised by**
means for adjusting the optical axis direction of the phase retardation plate, whereby a mode conversion between a full transmissive mode, a transflective mode and a full reflective mode can be achieved in the display panel, so that: when the optical axis of the phase retardation plate and the transmission axis of the first reflective polarizer sheet form an angle of 0° or 90°, the display panel is in the full reflective mode; when the optical axis of the phase retardation plate and the transmission axis of the first reflective polarizer sheet form an angle of 45°, the display panel is in the full transmissive mode; and when the optical axis of the phase retardation plate and the transmission axis of the first reflective polarizer sheet form an angle which is greater than 0° and less than 45°, or greater than 45° and less than 90°, the display panel is in the transflective mode.

3. The display panel according to one of the previous claims, wherein a second reflective polarizer sheet (506) is further provided between the transflective film (502, 501) and the lower polarizer sheet (503), and the transmission axis of the second reflective polarizer sheet is parallel to the transmission axis of the lower polarizer sheet.

4. A display device comprising the display panel according to any one of claims 1-3.

## Patentansprüche

1. Anzeigetafel, umfassend: eine Flüssigkristallzelle (404, 504), eine obere Polarisationsfolie (405, 505), die über der Flüssigkristallzelle angeordnet ist, eine untere Polarisationsfolie (403, 503), die unter der Flüssigkristallzelle angeordnet ist, und einen transflektiven Film, der unter der unteren Polarisationsfolie angeordnet ist, wobei der transflektive Film eine Phasenverzögerungsplatte (402, 502) und eine erste reflektierende Polarisationsfolie (401, 501) unter der Phasenverzögerungsplatte umfasst, wobei die Transmissionsachse der ersten reflektierenden Polarisationsfolie parallel zu der Transmissionsachse der unteren Polarisationsfolie verläuft, **dadurch gekennzeichnet, dass** der Phasenverzögerungswert der Phasenverzögerungsplatte ein ungerades Vielfaches einer halben Wellenlänge ist, und des Weiteren **gekennzeichnet durch** ein Mittel zum Einstellen der Richtung der optischen Achse der Phasenverzögerungsplatte, wodurch eine Modusumwandlung zwischen einem voll-durchlässigen Modus, einem transflektiven Modus und einem voll-reflektierenden Modus in der Anzeigetafel erreicht werden kann, dergestalt, dass, wenn die optische Achse der Phasenverzögerungsplatte und die Transmissionsachse der ersten reflektierenden Polarisationsfolie einen Winkel von 0° oder 90° bilden, die Anzeigetafel im voll-durchlässigen Modus ist; wenn die optische Achse der Phasenverzögerungsplatte und die Transmissionsachse der ersten reflektierenden Polarisationsfolie einen Winkel von 45° bilden, die Anzeigetafel im voll-reflektierenden Modus ist; und wenn die optische Achse der Phasenverzögerungsplatte und die Transmissionsachse der ersten reflektierenden Polarisationsfolie einen Winkel bilden, der größer als 0° und kleiner als 45° oder größer als 45° und kleiner als 90° ist, die Anzeigetafel im transflektiven Modus ist.

2. Anzeigetafel, umfassend: eine Flüssigkristallzelle (404, 504), eine obere Polarisationsfolie (405, 505), die über der Flüssigkristallzelle angeordnet ist, eine untere Polarisationsfolie (403, 503), die unter der Flüssigkristallzelle angeordnet ist, und einen transflektiven Film, der unter der unteren Polarisationsfolie angeordnet ist, wobei der transflektive Film eine Phasenverzögerungsplatte (402, 502) und eine erste reflektierende Polarisationsfolie (401, 501) unter der Phasenverzögerungsplatte umfasst, wobei die Transmissionsachse der ersten reflektierenden Polarisationsfolie senkrecht zu der Transmissionsachse der unteren Polarisationsfolie verläuft, **dadurch gekennzeichnet, dass** der Phasenverzögerungswert der Phasenverzögerungsplatte ein ungerades Vielfaches einer halben Wellenlänge ist, und des Weiteren **gekennzeichnet durch** ein Mittel zum Einstellen der Richtung der optischen Achse der Phasenverzögerungsplatte, wodurch eine Modusumwandlung zwischen einem voll-durchlässigen Modus, einem transflektiven Modus und einem voll-reflektierenden Modus in der Anzeigetafel erreicht werden kann, dergestalt, dass, wenn die optische Achse der Phasenverzögerungsplatte und die Transmissionsachse der ersten reflektierenden Polarisationsfolie einen Winkel von 0° oder 90° bilden, die Anzeigetafel im voll-reflektierenden Modus ist; wenn die optische Achse der Phasenverzögerungsplatte und die Transmissionsachse der ersten reflektierenden Polarisationsfolie einen Winkel von 45° bilden, die Anzeigetafel im voll-durchlässigen Modus ist; und wenn die optische Achse der Phasenverzögerungsplatte und die Transmissionsachse der ersten reflektierenden Polarisationsfolie einen Winkel bilden, der größer als 0° und kleiner als 45° oder größer als 45° und kleiner als 90° ist, die Anzeigetafel im transflektiven Modus ist.

3. Anzeigetafel nach einem der vorangehenden Ansprüche, wobei des Weiteren eine zweite reflektierende Polarisationsfolie (506) zwischen dem transflektiven Film (502, 501) und der unteren Polarisationsfolie (503) angeordnet ist und die Transmissionsachse der zweiten reflektierenden Polarisationsfolie parallel zu der Transmissionsachse der unteren Polarisationsfolie verläuft.

4. Anzeigevorrichtung, welche die Anzeigetafel nach einem der Ansprüche 1-3 umfasst.

## Revendications

1. Panneau d'affichage comprenant une cellule à cristaux liquides (404, 504), une feuille polarisante supérieure (405, 505) agencée au-dessus de la cellule à cristaux liquides, une feuille polarisante inférieure (403, 503) agencée sous la cellule à cristaux liquides, et un film transflectif agencé sous la feuille polarisante inférieure, le film transflectif comprenant une plaque de retard de phase (402, 502) et une première feuille polarisante réflective (401, 501) sous la plaque de retard de phase,
dans lequel l'axe de transmission de la première feuille polarisante réflective est parallèle à l'axe de transmission de la feuille polarisante inférieure,
**caractérisé en ce que** la valeur de retard de phase de la plaque de retard de phase est un multiple impair d'une demi-longueur d'onde, et **caractérisé en outre par** un moyen pour régler la direction de l'axe optique de la plaque de retard de phase, moyennant quoi une conversion de mode entre un mode transmissif complet, un mode transflectif et un mode réflectif complet peut être obtenue dans le panneau d'affichage, de sorte que :
lorsque l'axe optique de la plaque de retard de phase et l'axe de transmission de la première feuille polarisante réflective forment un angle de 0° ou de 90°, le panneau d'affichage est dans le mode transmissif complet ; lorsque l'axe optique de la plaque de retard de phase et l'axe de transmission de la première feuille polarisante réflective forment un angle de 45°, le panneau d'affichage est dans le mode réflectif complet ; et lorsque l'axe optique de la plaque de retard phase et l'axe de transmission de la première feuille polarisante réflective forment un angle supérieur à 0° et inférieur à 45° ou supérieur à 45° et inférieur à 90°, le panneau d'affichage est dans le mode transflectif.

2. Panneau d'affichage comprenant une cellule à cristaux liquides (404, 504), une feuille polarisante supérieure (405, 505) agencée au-dessus de la cellule à cristaux liquides, une feuille polarisante inférieure (403, 503) agencée sous la cellule à cristaux liquides, et un film transflectif agencé sous la feuille polarisante inférieure, le film transflectif comprenant une plaque de retard de phase (402, 502) et une première feuille polarisante réflective (401, 501) sous la plaque de retard de phase,
dans lequel l'axe de transmission de la première feuille polarisante réflective est perpendiculaire à l'axe de transmission de la feuille polarisante inférieure,
**caractérisé en ce que** la valeur de retard de phase de la plaque de retard de phase est un multiple impair d'une demi-longueur d'onde, et **caractérisé en outre par** un moyen pour régler la direction de l'axe optique de la plaque de retard de phase, moyennant quoi une conversion de mode entre un mode transmissif complet, un mode transflectif et un mode réflectif complet peut être obtenue dans le panneau d'affichage, de sorte que :
lorsque l'axe optique de la plaque de retard de phase et l'axe de transmission de la première feuille polarisante réflective forment un angle de 0° ou de 90°, le panneau d'affichage est dans le mode réflectif complet ; lorsque l'axe optique de la plaque de retard de phase et l'axe de transmission de la première feuille polarisante réflective forment un angle de 45°, le panneau d'affichage est dans le mode transmissif complet ; et lorsque l'axe optique de la plaque de retard phase et l'axe de transmission de la première feuille polarisante réflective forment un angle supérieur à 0° et inférieur à 45° ou supérieur à 45° et inférieur à 90°, le panneau d'affichage est dans le mode transflectif.

3. Panneau d'affichage selon l'une des revendications précédentes, dans lequel une seconde feuille polarisante réfléchissante (506) est en outre prévue entre le film transflectif (502, 501) et la feuille polarisante inférieure (503), et l'axe de transmission de la seconde feuille polarisante réflective est parallèle à l'axe de transmission de la feuille polarisante inférieure.

4. Dispositif d'affichage comprenant le panneau d'affichage selon l'une quelconque des revendications 1 à 3.
